# EUROPEAN PATENT APPLICATION

(11) **EP 4 615 037 A1**
(43) Date of publication of application: **10.09.2025**
(21) Application number: 23896205.4
(22) Date of filing: 15.09.2023
(51) Int. Cl.: H04W 24/04

(54) **CLOCK QUALITY LEVEL SETTING METHOD, DEVICE AND SYSTEM**

(30) Priority: 30.11.2022 CN 202211521315; 17.01.2023 CN 202310108605
(71) Applicant: Huawei Technologies Co., Ltd., Shenzhen, Guangdong 518129 (CN)
(72) Inventor: LYU, Jingfei, Shenzhen, Guangdong 518129 (CN); SHAO, Mingsong, Shenzhen, Guangdong 518129 (CN); CHEN, Cong, Shenzhen, Guangdong 518129 (CN); LI, Hao, Shenzhen, Guangdong 518129 (CN)
(74) Representative: MERH-IP Matias Erny Reichl Hoffmann Patentanwälte PartG mbB
(86) International application number: PCT/CN2023/118949
(87) International publication number: WO 2024/114048

(57) **Abstract**

This application discloses a clock class setting method, a device, and a system. A clock device determines a clock class in a locked mode as a first value, and determines a clock class in an out-of-holdover mode as a second value, where the first value is greater than the second value. If the clock device enters the out-of-holdover mode from the locked mode, the clock device changes the clock class from the first value to the second value. In other words, according to the technical solution provided in this application, the clock class corresponding to the clock device in the locked mode, that is, the first value, is set in this application. Because the first value is greater than the second value, when the clock device connected to a clock source in a time synchronization network enters the out-of-holdover mode from the locked mode, the clock class corresponding to the clock device changes to the second value. When a new clock source is selected, a clock device corresponding to a lowest clock class is selected as the new clock source. Therefore, the clock device connected to the original clock source is quickly selected as the new clock source, to reduce a quantity of switching times.

## Description

This application claims priority to Chinese Patent Application No. 202211521315.1, filed with the China National Intellectual Property Administration on November 30, 2022 and entitled "CLOCK CLASS SETTING METHOD, DEVICE, AND SYSTEM", which is incorporated herein by reference in its entirety.

This application claims priority to Chinese Patent Application No. 202310108605.1, filed with the China National Intellectual Property Administration on January 17, 2023 and entitled "CLOCK CLASS SETTING METHOD, DEVICE, AND SYSTEM", which is incorporated herein by reference in its entirety.

### TECHNICAL FIELD

This application relates to the field of communication technologies, and in particular, to a clock class setting method, a device, and a system.

### BACKGROUND

Currently, a time division duplexing (time division duplexing, TDD) service of a 5G base station requires a deviation between time of each base station and standard time (like GPS time and BeiDou time) being less than +/-1.5 µs. In the IEEE 1588v2 time synchronization technology in the IEEE standard for a precision clock synchronization protocol for networked measurement and control systems (IEEE standard for a precision clock synchronization protocol for networked measurement and control systems), standard time of a source end (a time source device, or a 1588v2 server) may be transmitted to an end 5G base station through an intermediate transmission device, to satisfy the requirement of +/-1.5 µs. A mainstream deployment solution of the 1588v2 synchronization technology requires that the time source device, the base station, and the intermediate transmission device all support a 1588v2 function.

The ITU-T G.8275.1 standard defines detailed device interworking requirements according to the IEEE 1588v2 standard, and also defines three types of devices: a telecom grandmaster (telecom grandmaster, T-GM) device, also defined as a 1588v2 master clock device, which typically obtains standard time from a satellite and sends the time to another device through a 1588v2 packet; a telecom boundary clock (telecom boundary clock, T-BC) device, also defined as a 1588v2 boundary clock device, which obtains time carried in a 1588v2 packet from another device, and then sends corrected time to another device through a new 1588v2 packet; and a telecom time slave clock (telecom time slave clock, T-TSC) device, also defined as a 1588v2 time slave clock device, which obtains time carried in a 1588v2 packet from another device, adjusts time of the telecom time slave clock device, and then sends the adjusted time to a service module for use or transmits the adjusted time to another device through another time protocol.

Currently, after a T-GM is lost, a new T-GM is finally selected from a plurality of T-BCs after a plurality of switching times in the network. This causes instability of the network.

### SUMMARY

This application provides a clock class setting method, a device, and a system, to make a network quickly select a backup clock source after a master clock source is lost, and reduce a quantity of network switching times in a selection process, to avoid network flapping.

According to a first aspect of this application, a clock class setting method is provided. The method is applied to a clock device, and includes: if the clock device determines a clock class in a locked mode as a first value, determining a clock class in an out-of-holdover mode as a second value, where the first value is greater than the second value. If the clock device enters the out-of-holdover mode from the locked mode, the clock device changes the clock class from the first value to the second value. A parameter value of the first value is greater than a parameter value of the second value. In other words, the clock class corresponding to the clock device in the locked mode, that is, the first value, is set in this application. Because the first value is greater than the second value, when the clock device in a time synchronization network enters the out-of-holdover mode from the locked mode, the clock class corresponding to the clock device changes to the second value. When a new clock source is selected, a clock device corresponding to a lowest clock class is selected as the new clock source. Therefore, the clock device that enters the out-of-holdover mode is quickly selected as the new clock source, and another clock device in the locked mode does not perform source switching, thereby reducing a quantity of switching times.

The clock device may be a 1588 clock device, and specifically, may be a master clock device or a boundary clock device.

In some implementations, if the clock device does not lose a clock source, the clock device maintains the clock class as the first value. In other words, if the clock device is always in the locked mode, the clock class of the clock device is maintained as the first value.

If the clock device enters a within-holdover mode from the locked mode, the clock class of the clock device changes from the first value to a third value, where the third value indicates a clock class of the clock device in the within-holdover mode.

That the clock device enters the out-of-holdover mode from the locked mode includes: The clock device enters the within-holdover mode from the locked mode, and the clock device changes the clock class from the first value to the third value, where the third value indicates the clock class of the clock device in the within-holdover mode and the first value is greater than the third value; and the clock device enters the out-of-holdover mode from the within-holdover mode, and the clock device changes the clock class from the third value to the second value. The second value is greater than the third value. For example, the parameter value of the second value is 165, and the third value is 135. Specifically, a larger parameter value indicates poorer clock quality. In other words, clock quality indicated by the third value is better than clock quality indicated by the second value.

If the clock device enters the locked mode from a free-run mode, the clock device changes the clock class from a fourth value to the first value, where the fourth value indicates a clock class of the clock device in the free-run mode. The fourth value is greater than or equal to the first value. For example, the clock device is the boundary clock device, the first value is 216, and the fourth value is 248. In other words, when the clock device enters the locked mode from the free-run mode, the clock device follows the clock source, and quality of a clock signal sent by the clock device increases, and the clock class increases accordingly.

The clock class is a clock class indicated by a default dataset field (defaultDS.clockQuality.clockClass) defined in the boundary clock device, and a parameter value carried in the default dataset field (defaultDS.clockQuality.clockClass) varies with a mode of the clock device.

In some implementations, if the clock device is in the locked mode, the clock device sends a first announce packet, where a clock class carried in the first announce packet is a clock class of a clock source received by the clock device. If the clock device is not in the locked mode, the clock device sends a second announce packet, where a clock class included in the second announce packet is a sender clock class defined in the clock device.

In this embodiment, when the clock device is in the locked mode, the clock class included in the first announce packet sent by the clock device to another device is the clock class of the clock source received by the clock device. If the boundary device is not in the locked mode, for example, is in the free-run mode, the within-holdover mode, or the out-of-holdover mode, when the clock device sends the second announce packet to another device, the clock class included in the second announce packet is the clock class of the clock device. The clock class of the clock device is the newly defined sender clock class (sender clock class).

If the clock device is in the out-of-holdover mode, the sender clock class is the second value; if the clock device is in the within-holdover mode, the sender clock class is the third value in the within-holdover mode; and if the clock device is in the free-run mode, the sender clock class is the fourth value in the free-run mode.

In some implementations, if the clock device is a boundary clock device, a clock synchronization network in which the boundary clock device is located includes a first boundary clock device, a second boundary clock device, and a first master clock device. The first boundary clock device is connected to the first master clock device, the first master clock is a clock source of the first boundary clock device, and the second boundary clock device is connected to the first boundary clock device. The method further includes: If the first boundary clock device loses the clock source, a clock class of the first boundary clock device changes from the first value to the second value in the out-of-holdover mode or the third value in the within-holdover mode, the second boundary clock device maintains a clock class as the first value, and the first boundary clock device is a new clock source.

In some implementations, the clock synchronization network further includes a second master clock device, and the second boundary clock device is connected to the second master clock device. A value of a clock class corresponding to the second master clock device is less than the first value, and the second master clock device serves as a new clock source.

According to a second aspect of this application, a network device is provided, where the network device is a clock device and includes:
a determining unit, configured to: if the clock device is in a locked mode, determine a clock class as a first value, and determine a clock class of the clock device in an out-of-holdover mode as a second value, where the first value is greater than the second value; and a processing unit, configured to: if the clock device enters the out-of-holdover mode from the locked mode, change the clock class from the first value to the second value.

The clock device is a 1588 clock device, or the clock device is a 1588 boundary clock device.

In some implementations, the processing unit is further configured to: if the clock device does not lose a clock source, maintain the clock class as the first value.

In some implementations, the processing unit is specifically configured to: the clock device enters a within-holdover mode from the locked mode, change the clock class from the first value to a third value, where the third value indicates a clock class of the clock device in the within-holdover mode, and the first value is greater than the third value; and the clock device enters the out-of-holdover mode from the within-holdover mode, change, for the clock device, the clock class from the third value to the second value, where the second value is greater than the third value.

In some implementations, the processing unit is further configured to: if the clock device enters the locked mode from a free-run mode, change the clock class from a fourth value to the first value, where the fourth value is greater than or equal to the first value, and the fourth value indicates a clock class of the clock device in the free-run mode.

In some implementations, the clock class is a clock class in a default dataset of the clock device.

In some implementations, the network device further includes a sending unit. The sending unit is configured to: if the clock device is in the locked mode, send a first announce packet, where a clock class carried in the first announce packet is a clock class of a clock source received by the clock device; and the sending unit is configured to: if the clock device is not in the locked mode, send a second announce packet, where a clock class carried in the second announce packet is a sender clock class defined in the clock device.

In some implementations, if the clock device is in the out-of-holdover mode, the sender clock class is the second value; if the clock device is in the within-holdover mode, the sender clock class is the third value in the within-holdover mode; and if the clock device is in the free-run mode, the sender clock class is the fourth value in the free-run mode.

In some implementations, if the clock device is a boundary clock device, a clock synchronization network in which the boundary clock device is located includes a first boundary clock device, a second boundary clock device, and a first master clock device. The first boundary clock device is connected to the first master clock device, the first master clock is a clock source of the first boundary clock device, and the second boundary clock device is connected to the first boundary clock device. If the first boundary clock device loses the clock source, a clock class of the first boundary clock device changes from the first value to the second value in the out-of-holdover mode or the third value in the within-holdover mode, the second boundary clock device maintains a clock class as the first value, and the first boundary clock device is a new clock source.

In some implementations, the clock synchronization network further includes a second master clock device, and the second boundary clock device is connected to the second master clock device. Because a value of a clock class corresponding to the second master clock device is less than the first value, the second master clock device serves as a new clock source.

According to a third aspect of this application, a network device is provided. The network device includes a processor and a memory.

The memory is configured to store instructions or a computer program.

The processor is configured to execute the instructions or the computer program in the memory, so that the network device performs the method according to any one of the first aspect or the possible designs of the first aspect.

According to a fourth aspect of this application, a chip is provided, including an interface circuit and a processor. The interface circuit is connected to the processor, and the processor is configured to enable the chip to perform the method according to any one of the first aspect or the possible designs of the first aspect.

According to a fifth aspect of this application, a clock synchronization network system is provided. The system includes a boundary clock device and a master clock device.

Both the boundary clock device and the master clock device may perform the method according to any one of the first aspect or the possible designs of the first aspect.

According to a sixth aspect of this application, a computer-readable storage medium is provided, including instructions. When the instructions are run on a computer, the computer is enabled to perform the method according to any one of the first aspect or the possible designs of the first aspect.

According to a seventh aspect of this application, a computer program product is provided, where the computer program product includes a program. When the program is run on a processor, a computer or a network device is enabled to perform the method in any one of the first aspect or the possible designs of the first aspect.

According to the technical solution provided in this application, a clock device determines a clock class in a locked mode as a first value, and determines a clock class in an out-of-holdover mode as a second value, where the first value is greater than the second value. If the clock device enters the out-of-holdover mode from the locked mode, the clock device changes the clock class from the first value to the second value. In other words, according to the technical solution provided in this application, the clock class corresponding to the clock device in the locked mode, that is, the first value, is set in this application. Because the first value is greater than the second value in the out-of-holdover mode, when the clock device connected to a clock source in a time synchronization network enters the out-of-holdover mode from the locked mode, the clock class corresponding to the clock device changes to the second value. When a new clock source is selected, a clock device corresponding to a lowest clock class is selected as the new clock source. Therefore, the clock device connected to the original clock source is quickly selected as the new clock source, to reduce a quantity of switching times.

### BRIEF DESCRIPTION OF DRAWINGS

To describe the technical solutions in embodiments of this application or the prior art more clearly, the following briefly describes the accompanying drawings for describing embodiments or the prior art. It is clear that, the accompanying drawings in the following description show only some embodiments recorded in this application, and persons of ordinary skill in the art may still derive other drawings from these accompanying drawings without creative efforts.
FIG. 1 is a diagram of a structure of a clock synchronization network according to an embodiment of this application;
FIG. 2 is a diagram of a structure of another clock synchronization network according to an embodiment of this application;
FIG. 3 is a flowchart of a clock class setting method according to an embodiment of this application;
FIG. 4 is a diagram of a clock class relationship in an announce packet according to an embodiment of this application;
FIG. 5 is a diagram of a structure of a network device according to an embodiment of this application;
FIG. 6 is a diagram of a structure of another network device according to an embodiment of this application; and
FIG. 7 is a diagram of a structure of still another network device according to an embodiment of this application.

### DESCRIPTION OF EMBODIMENTS

To make a person skilled in the art understand the solutions in this application better, the following clearly and completely describes the technical solutions in embodiments of this application with reference to the accompanying drawings in embodiments of this application. It is clear that the described embodiments are merely a part rather than all of embodiments of this application.

Currently, the G.8275.1 standard defines three device forms and also defines various clock modes of the devices, including a locked mode, a within-holdover mode, an out-of-holdover mode, and a free-run mode.

Locked mode: In which a clock of a device is locked to an input clock source, including two cases: A T-GM device is locked to an input satellite source, and a clock of a T-BC device and a clock of a T-TSC device are locked to an input 1588v2 source.

Within-holdover mode: In which an input clock source of a device is lost, and time performance of the device is within a required range (for example, +/-1.5 µs).

Out-of-holdover mode: In which an input clock source of a device is lost, but time performance of the device is beyond a required range (for example, +/-1.5 µs).

Free-run mode: In which a device does not trace any clock source, for example, a power-on state of the device.

According to the 1588v2 standard, devices supporting the G.8275.1 standard have a default clock class parameter defaultDS.clockQuality.clockClass, which represents a default clock class of each of the devices. Parameter values for the default parameter set are different for different modes. For example, as shown in Table 1, a smaller parameter value indicates higher clock quality in the mode, and a larger parameter value indicates poorer clock quality in the mode.

**Table 1 Clock class parameter values**

| Application scenarios | Parameter value of defaultDS.clockQuality.clockClass |
|---|---|
| T-GM in the locked mode for tracing a satellite signal | 6 |
| T-GM in the within-holdover mode | 7 |
| T-BC in the within-holdover mode | 135 |
| T-GM in the out-of-holdover mode with a frequency level of 1 | 140 |
| T-GM in the out-of-holdover mode with a frequency level of 2 | 150 |
| T-GM in the out-of-holdover mode with a frequency level of 3 | 160 |
| T-BC in the out-of-holdover mode | 165 |
| T-GM and T-BC in the free mode | 248 |
| T-TSC device | 255 |

As shown in Table 1, a parameter value of defaultDS.clockQuality.clockClass for a T-BC device in the locked mode is not defined in the G.8275.1 standard. If the parameter value of defaultDS.clockQuality.clockClass for the T-BC device in the locked mode is the same as that for the T-BC device in holdover modes (135 or 165), an exception may occur during network switching.

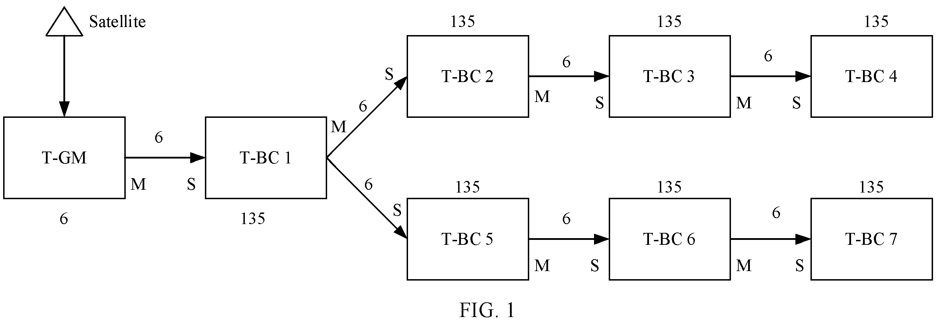

For example, in a clock synchronization network shown in FIG. 1, the clock synchronization network includes a master clock T-GM and seven boundary clocks T-BC 1 to T-BC 7. When the T-GM operates normally and a link between the T-GM and the T-BC 1 is normal, the T-BC is in a locked mode and defaultDS.clockQuality.clockClass is 135. After the T-GM is lost, the T-BC 1 enters the within-holdover mode from the locked mode, and the parameter value of defaultDS.clockQuality.clockClass is still 135. According to a best master clock (best master clock, BMC) source selection algorithm defined in G.8275.1, because parameter values of defaultDS.clockQuality.clockClass for all T-BC devices are the same, the BMC algorithm selects a T-BC with a smallest clock ID (clockID) as a new T-GM. A clock ID of each device is random. Therefore, the T-BC 4 or the T-BC 7 may be selected as the new T-GM for the network, which is inconsistent with a network plan. Generally, the network plan is that when the T-GM is lost, the T-BC 1 becomes the new T-GM and transmits 1588v2 time to other T-BC devices from top to bottom. In addition, after the T-GM is lost and before the T-BC 4 or the T-BC 7 is selected as the new T-GM, the T-BC 4 or T-BC 7 can only be selected as the new T-GM step by step through multi-time network switching.

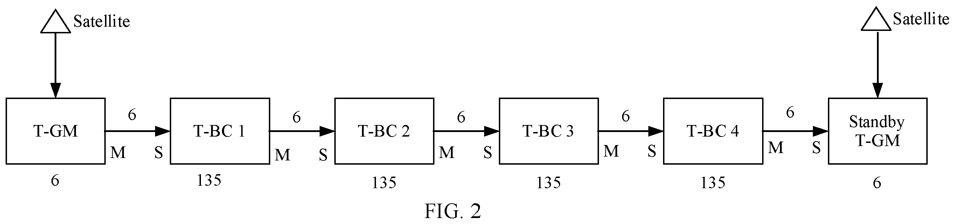

In another clock synchronization network shown in FIG. 2, the clock synchronization network includes two master clock devices: a master T-GM and a standby T-GM, and four boundary clock devices T-BC 1 to T-BC 4. The master T-GM is connected to the T-BC 1, and the standby T-GM is connected to the T-BC 4. When the master T-GM is normal, the T-BC 1, the T-BC 2, the T-BC 3, and the T-BC 4 all trace the master T-GM, and parameter values for defaultDS.clockQuality.clockClass for the T-BC 1, the T-BC 2, the T-BC 3, and the T-BC 4 are all 135. After the master T-GM is lost, the network selects a T-BC with a smallest clock ID as the new T-GM before switching to the standby T-GM. It is assumed that a clock ID relationship of the T-BCs is T-BC 1>T-BC 2>T-BC 3>T-BC 4. Before switching to the standby T-GM, the network sequentially selects the T-BC 1, the T-BC 2, the T-BC 3, and the T-BC 4 as the T-GM, and then selects the standby T-GM as the final T-GM. If there are a large quantity of nodes between the master and standby T-GMs, the network can only be stabilized to the standby T-GM through multi-time switching.

It can be learned from the foregoing that, after the T-GM is lost, the new T-GM can only be selected through multi-time switching. As a result, network flapping is prone to occur.

Based on this, this application provides a solution. When a T-BC device is in a locked mode, a proper clock class is set for the T-BC device, so that when a new T-GM is selected, the new T-GM can be quickly selected according to a network plan, to reduce a quantity of network switching times and avoid network flapping. Specifically, when the T-BC device is in the locked mode, it is determined that a local clock class (defaultDS.clockQuality.clockClass) value corresponding to the T-BC device is a first value, where the first value is greater than a corresponding second value when the T-BC device is in an out-of-holdover mode. In other words, clock quality indicated by the first value is inferior to clock quality indicated by the second value.

For ease of understanding of the technical solutions provided in this application, the following provides descriptions with reference to the accompanying drawings.

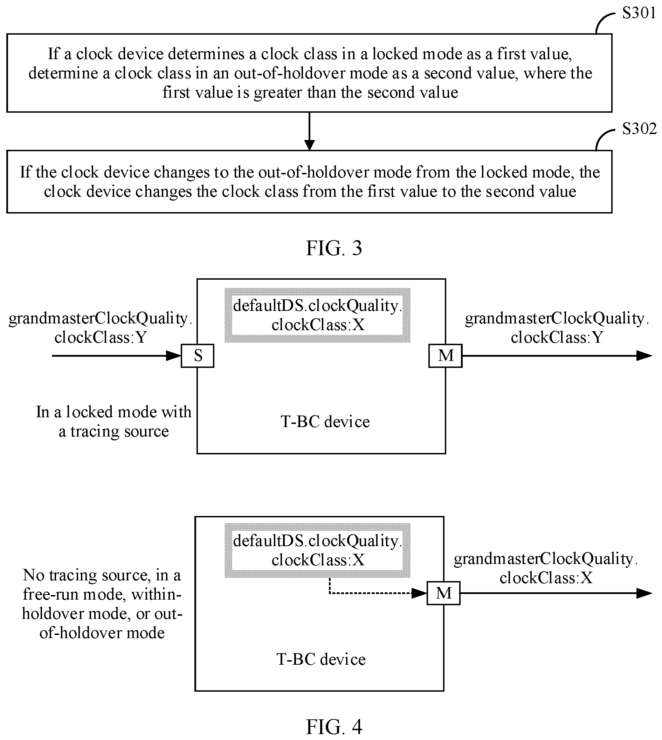

FIG. 3 is a flowchart of a clock class setting method according to an embodiment of this application. As shown in FIG. 3, the method includes the following steps.

S301: If a clock device determines a clock class as a first value, the clock device determines a clock class in an out-of-holdover mode as a second value, where the first value is greater than the second value.

The clock device may be a boundary clock device or a master clock device. When the clock device is the master clock device, a value corresponding to a clock class in a locked mode is a redefined value, which is greater than the second value of the master clock device in the out-of-holdover mode. For ease of understanding, the following uses an example in which the clock device is the boundary clock device for description.

In this embodiment, after entering the locked mode, the clock device determines the clock class corresponding to the clock device as the first value. After entering the out-of-holdover mode, the clock device determines the clock class corresponding to the clock device as the second value. For example, the second value of the boundary clock device is 165, and the second value indicates the clock class of the boundary clock device in the out-of-holdover mode. The first value may be 216 or 248, and a larger value indicates a lower clock class. Specifically, the clock class may be a clock class indicated by a default dataset field (defaultDS.clockQuality.clockClass) of the clock device. For example, when the boundary clock device is in the locked mode, a parameter value of defaultDS.clockQuality.clockClass is 248, and the first value is 248.

When the clock device is in the locked mode, the clock device may enter the locked mode from a free-run mode, or may enter the locked mode from a within-holdover mode, or may enter the locked mode from the out-of-holdover mode.

In some implementations, if the clock device does not lose a clock source, the clock device may be always in the locked mode, and the clock device maintains the clock class as the first value.

S302: If the clock device enters the out-of-holdover mode from the locked mode, the clock device setting changes the clock class from the first value to the second value.

In this embodiment, when the clock device enters the out-of-holdover mode from the locked mode, the clock setting changes the clock class from the first value to the second value. In other words, after the clock device enters the out-of-holdover mode from the locked mode, the clock class changes from the first value to the second value because the clock source is lost. Specifically, the clock class indicated by the default dataset field (defaultDS.clockQuality.clockClass) in the clock device changes from the first value to the second value. For example, when the boundary clock device enters the out-of-holdover mode from the locked mode, the parameter value of the default dataset field (defaultDS.clockQuality.clockClass) changes from 248 to 165, that is, the second value is 165.

That the clock device enters the out-of-holdover mode from the locked mode may include the following cases: In one case, the clock device directly enters the out-of-holdover mode from the locked mode; and in another case, the clock device enters the within-holdover mode first from the locked mode, and then enters the out-of-holdover mode from the within-holdover mode. In this case, the clock class of the clock device first changes from the first value to a third value, and then changes from the third value to the second value. The third value indicates a clock class of the clock device in the within-holdover mode, and the second value is greater than the third value. For example, the second value of the boundary clock device is 165, and the third value is 135. For another example, the second value of the master clock device is 140/150 or 160, and the third value is 7.

The first value is greater than the second value, and the second value is greater than the third value. For example, the second value of the T-BC device in the out-of-holdover mode is 165, the third value of the T-BC device in the within-holdover mode is 135, and the first value of the T-BC device in the locked mode is 248 or 216. The first value is set to be greater than the second value (a larger parameter value indicates a lower class), to reduce a quantity of switching times and implement quick selection of a new T-GM. If the first value is set to be less than the second value, for example, 150, with reference to the clock synchronization network in FIG. 1, when the T-BC 1 does not lose the T-GM, the T-BC 1 to the T-BC 7 are all in the locked mode, and the clock class is 150. Alternatively, after the T-BC 1 loses the T-GM, it is assumed that the T-BC 1 enters the out-of-holdover mode, the clock class is 165, and the T-BC 1 to the T-BC 7 are still in the locked mode, and the clock class is 150. According to the network plan, the T-BC 1 is selected as the new T-GM. When the T-BC 1 sends a packet to the T-BC 2, a clock class carried in the packet is 165, but a clock class of the T-BC 2 is 150. According to a BMC source selection algorithm, the T-BC 2 is selected as the new T-GM and changes to the out-of-holdover mode, and the clock class changes to 165. When the T-BC 2 sends a packet to the T-BC 3, a clock class carried in the packet is 165, but a clock class of the T-BC 3 is 150. According to the BMC source selection algorithm, the T-BC 3 is selected as the new T-GM and changes to the out-of-holdover mode, and the clock class changes to 165. The rest may be deduced by analogy. The network still performs switching for a plurality of times.

If the first value is set to be less than the third value, for example, 130, with reference to the clock synchronization network in FIG. 1, when the T-BC 1 does not lose the T-GM, the T-BC 1 to the T-BC 7 are all in the locked mode, and the clock class is 130; and after the T-BC 1 loses the T-GM, it is assumed that the T-BC 1 enters the within-holdover mode, the clock class is 135, and the T-BC 1 to the T-BC 7 are still in the locked mode, and the clock class is 130. According to the network plan the T-BC 1 is selected as the new T-GM. When the T-BC 1 sends a packet to the T-BC 2, a clock class carried in the packet is 135, but a clock class of the T-BC 2 is 130. According to the BMC source selection algorithm, the T-BC 2 is selected as the new T-GM and changes to the within-holdover mode, and the clock class changes to 135. When the T-BC 2 sends the packet to the T-BC 3, the clock class carried in the packet is 135, but the clock class of the T-BC 3 is 130. According to the BMC source selection algorithm, the T-BC 3 is selected as the new T-GM and changes to the within-holdover mode, and the clock class changes to 135. The rest may be deduced by analogy. The network still performs switching for a plurality of times.

In some implementations, if the clock device enters the locked mode from the free-run mode (for example, a state when the clock device is just powered on), the clock device determines that the clock class changes from a fourth value to the first value, where the fourth value indicates a clock class of the clock device in the free-run mode. Specifically, the clock class indicated by the default dataset field (defaultDS.clockQuality.clockClass) in the clock device changes from the fourth value to the first value. The fourth value is greater than or equal to the first value. For example, when the clock device is the boundary clock device, both the first value and the fourth value are 248, or the first value is 216 and the fourth value is 248. When the boundary clock device is in the free-run mode, the parameter value of the default dataset field (defaultDS.clockQuality.clockClass) is 248. When the boundary clock device enters the locked mode from the free-run mode, the parameter value of the default dataset field (defaultDS.clockQuality.clockClass) changes from 248 to 216.

In some implementations, if the clock device is a boundary clock device, a clock synchronization network in which the boundary clock device is located includes a first boundary clock device, a second boundary clock device, and a first master clock device. The first boundary clock device is connected to the first master clock device, the first master clock is a clock source of the first boundary clock device, and the second boundary clock device is connected to the first boundary clock device. The method further includes: If the first boundary clock device loses the clock source, a clock class of the first boundary clock device changes from the first value to the second value in the out-of-holdover mode or the third value in the within-holdover mode, the second boundary clock device maintains a clock class as the first value, and the first boundary clock device is determined as a new clock source.

For example, the first master clock device is the T-GM in FIG. 1, or the master T-GM in FIG. 2, the first boundary clock device is the T-BC 1 in FIG. 1 or FIG. 2, and the second boundary clock device is the T-BC 2 in FIG. 1 or FIG. 2.

The clock synchronization network further includes a second master clock device, and the second boundary clock device is connected to the second master clock device. A value of a clock class corresponding to the second master clock device is less than the first value, and the second master clock device serves as a new clock source. For example, the first master clock device is the master T-GM in FIG. 2, the second master clock device is the secondary T-GM in FIG. 2, the first boundary clock device is the T-BC 1 in FIG. 2, and the second boundary clock device is the T-BC 2 in FIG. 2.

When the second master clock device is selected as the new clock source, the second master clock device sends an announce packet to another T-BC device, where the announce packet includes a clock class corresponding to the second master clock device. Therefore, the second boundary clock receives the announce packet sent by the second master clock device, and the first boundary clock device receives an announce packet sent by the second boundary clock device, where the announce packet includes the clock class corresponding to the second master clock device.

For ease of understanding a first clock class set in this application, the following provides descriptions with reference to the clock synchronization networks corresponding to FIG. 1 and FIG. 2. In the following example, the parameter value of the clock class of the T-BC device in the locked mode is set to 248.

For the clock synchronization network shown in FIG. 1, when a link between the T-GM and the T-BC 1 is faulty, the clock class of the T-BC 1 changes to 135 (or 165). Because the T-BC 2 to the T-BC 7 are still in the locked mode, clock classes of the T-BC2 to the T-BC 7 are still 248. According to the BMC source selection algorithm defined in G.8275.1, the clock class of the T-BC 1 is lower than that of other T-BC devices. Therefore, the T-BC 1 is selected as the new T-GM for the entire network, and the T-BC 2 to the T-BC 7 trace the T-BC 1.

For the clock synchronization network shown in FIG. 2, when the link between the master T-GM and the T-BC 1 is faulty, the clock class of the T-BC 1 changes to 135 (or 165). Because the T-BC 2 to the T-BC 4 are still in the locked mode, the clock classes of the T-BC 2 to the T-BC 4 are still 248. According to the BMC source selection algorithm defined in G.8275.1, the clock class of the T-BC 1 is lower than that of other T-BC devices. Therefore, the T-BC 1 is selected as the new T-GM for the entire network. After the T-BC 4 sends an announce packet including the clock class 135 to the secondary T-GM, a port that is of the secondary T-GM and that is connected to the T-BC 4 becomes a master (Master) port because a clock class of the secondary T-GM is 6. Then, the T-BC 4 sends an announce packet including the clock class of 6 to the secondary T-GM. The T-BC 4 chooses to trace the secondary T-GM and sends the announce packet including the clock class of 6 to the T-BC 3. The T-BC 3 chooses to trace the T-BC 4 and sends the announce packet including the clock class of 6 to the T-BC 2. The T-BC 2 chooses to trace the T-BC 3 and sends the announce packet including the clock class of 6 to the T-BC 1. The T-BC 1 chooses to trace the T-BC 2, and switching is completed.

It can be seen that, the clock device determines the clock class in the locked mode as the first value, and determines the clock class in the out-of-holdover mode as the second value, where the first value is greater than the second value. If the clock device enters the out-of-holdover mode from the locked mode, the clock device changes the clock class from the first value to the second value. In other words, according to the technical solution provided in this application, the clock class corresponding to the clock device in the locked mode, that is, the first value, is set in this application. Because the first value is greater than the second value in the out-of-holdover mode, when the clock device connected to the clock source in the time synchronization network enters the out-of-holdover mode from the locked mode, the clock class corresponding to the clock device changes to the second value. When a new clock source is selected, a clock device corresponding to a lowest clock class is selected as the new clock source. Therefore, the clock device connected to the original clock source is quickly selected as the new clock source, to reduce a quantity of switching times.

It can be learned from Table 1 that, the parameter value of the local default dataset (defaultDS.clockQuality.clockClass) defined in the clock device changes with the mode. To make the parameter value corresponding to the local default dataset be a fixed value, for example, the parameter value of defaultDS.clockQuality.clockClass of the T-BC device is 248 in all modes (including free-run, within-holdover, out-of-holdover, and locked modes), the T-BC device may redefine a sender clock class (senderClockClass) variable, so that the variable changes with the device mode. Specifically, if the clock device is in the locked mode, the sender clock class is the first value in the locked mode; if the clock device is in the out-of-holdover mode, the sender clock class is the second value in the out-of-holdover mode; if the clock device is in the within-holdover mode, the sender clock class is the third value in the within-holdover mode; and if the clock device is in the free-run mode, the sender clock class is the fourth value in the free-run mode.

When the clock device sends an announce packet to another device, the announce packet includes a field (grandmasterClockQuality.clockClass) that carries the clock class. FIG. 4 shows a relationship between conventional grandmasterClockQuality.clockClass and defaultDS.clockQuality.clockClass. When a T-BC device traces a clock source, a clock class in an announce packet sent by the T-BC device is a clock class of an input tracing source. When the T-BC device does not trace a clock source, a clock class in the announce packet sent by the T-BC device is a clock class corresponding to the T-BC device.

If a parameter value of defaultDS.clockQuality.clockClass of the clock device remains unchanged, a clock class carried in grandmasterClockQuality.clockClass of the announce packet sent by the clock device should be associated with senderClockClass. Specifically, if the clock device is in a locked mode, the clock device sends a first announce packet, where a clock class included in the first announce packet is the clock class of the input tracking source received by the clock device. If the clock device is not in the locked mode, the clock device sends a second announce packet, where a clock class included in the second announce packet is the sender clock class defined in the clock device. That the clock device is not in the locked mode may include that the clock device is in a free-run mode, a within-holdover mode, or an out-of-holdover mode.

Based on the foregoing method embodiments, an embodiment of this application provides a network device. The following describes the network device with reference to the accompanying drawings.

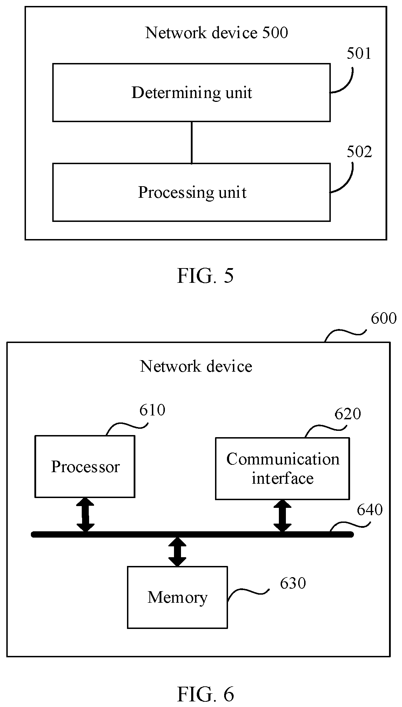

FIG. 5 is a diagram of a structure of a network device according to an embodiment of this application. As shown in FIG. 5, the network device 500 may implement functions of the clock device in the foregoing embodiments, and may include a determining unit 501 and a processing unit 502.

The determining unit 501 is configured to determine a clock class of the clock device in a locked mode as a first value, and determine a clock class of the clock device in an out-of-holdover mode as a second value, where the first value is greater than the second value.

The processing unit 502 is configured to: if the clock device enters the out-of-holdover mode from the locked mode, change the clock class from the first value to the second value.

In some implementations, the clock device is a 1588 clock device, or the clock device is a 1588 boundary clock device.

In some implementations, the processing unit 502 is further configured to: if the clock device does not lose a clock source, maintain the clock class as the first value.

In some implementations, the processing unit 502 is specifically configured to: if the clock device enters a within-holdover mode from the locked mode, change the clock class from the first value to a third value, where the third value indicates a clock class of the clock device in the within-holdover mode, and the first value is greater than the third value; and the clock device enters the out-of-holdover mode from the within-holdover mode, change the clock class from the third value to the second value, where the second value is greater than the third value.

In some implementations, the processing unit 502 is further configured to: if the clock device enters the locked mode from a free-run mode, change the clock class from a fourth value to the first value, where the fourth value is greater than or equal to the first value, and the fourth value indicates a clock class of the clock device in the free-run mode.

In some implementations, the clock class is a clock class in a default dataset of the clock device.

In some implementations, the network device further includes a sending unit.

The sending unit is configured to: if the clock device is in the locked mode, send a first announce packet, where a clock class included in the first announce packet is a clock class of a clock source received by the clock device.

The sending unit is configured to: if the clock device is not in the locked mode, send a second announce packet, where a clock class included in the second announce packet is a sender clock class defined in the clock device.

In some implementations, if the clock device is in the out-of-holdover mode, the sender clock class is the second value.

If the clock device is in the within-holdover mode, the sender clock class is the third value in the within-holdover mode, where the third value indicates the clock class in the within-holdover mode.

If the clock device is in the free-run mode, the sender clock class is the fourth value in the free-run mode, where the fourth value indicates the clock class in the free-run mode.

In some implementations, if the clock device is a boundary clock device, a clock synchronization network in which the boundary clock device is located includes a first boundary clock device, a second boundary clock device, and a first master clock device. The first boundary clock device is connected to the first master clock device, the first master clock is a clock source of the first boundary clock device, and the second boundary clock device is connected to the first boundary clock device. If the first boundary clock device loses the clock source, a clock class of the first boundary clock device changes from the first value to the second value in the out-of-holdover mode or the third value in the within-holdover mode, the second boundary clock device maintains a clock class as the first value, and the first boundary clock device is a new clock source.

In some implementations, the clock synchronization network further includes a second master clock device, and the second boundary clock device is connected to the second master clock device. A value of a clock class corresponding to the second master clock device is less than the first value, and the second master clock device serves as a new clock source.

It should be noted that, in embodiments of this application, unit division is an example, and is merely logical function division. In actual implementation, another division manner may be used. Functional units in embodiments of this application may be integrated into one processing unit, or each of the units may exist alone physically, or two or more units may be integrated into one unit. For example, in the foregoing embodiment, the processing unit and the sending unit may be a same unit, or may be different units. The integrated unit may be implemented in a form of hardware, or may be implemented in a form of a software functional unit.

FIG. 6 is a diagram of a structure of a network device according to an embodiment of this application. The network device may be, for example, the boundary clock device, the master clock device, and the slave clock device in the foregoing method embodiments, or may be a specific implementation of the network device 500 in an embodiment shown in FIG. 5.

The network device 600 includes a processor 610, a communication interface 620, and a memory 630. There may be one or more processors 610 in the communication device 600. In FIG. 6, one processor is used as an example. In this embodiment of this application, the processor 610, the communication interface 620, and the memory 630 may be connected through a bus system or in another manner. In FIG. 6, an example in which the processor 610, the communication interface 620, and the memory 630 are connected through a bus system 640 is used.

The processor 610 may be a CPU, an NP, or a combination of a CPU and an NP. The processor 610 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

The memory 630 may include a volatile memory (volatile memory), for example, a random-access memory (random-access memory, RAM). The memory 630 may alternatively include a non-volatile memory (non-volatile memory), for example, a flash memory (flash memory), a hard disk drive (hard disk drive, HDD), or a solid-state drive (solid-state drive, SSD). The memory 630 may alternatively include a combination of the foregoing types of memories. The memory 630 may store, for example, the segment routing SR policy mentioned above.

Optionally, the memory 630 stores an operating system, a program, and an executable module or a data structure, or a subset thereof, or an extended set thereof. The program may include various operation instructions for implementing various operations. The operating system may include various system programs to implement various basic services and process a hardware-based task. The processor 610 may read a program in the memory 630, to implement the method provided in embodiments of this application.

The memory 630 may be a storage component in the communication device 600, or may be a storage apparatus independent of the communication device 600.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, and the like. For ease of representation, only one bold line is used to represent the bus in FIG. 6, but this does not mean that there is only one bus or only one type of bus.

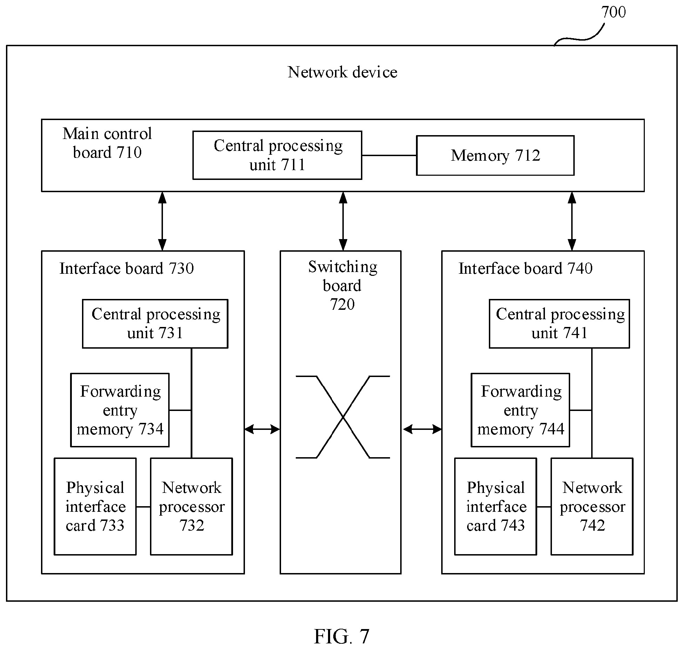

FIG. 7 is a diagram of a structure of a network device 700 according to an embodiment of this application. The network device may be, for example, the boundary clock device, the master clock device, and the slave clock device in the foregoing method embodiments, or may be a specific implementation of the device 500 in an embodiment shown in FIG. 5.

The network device 700 includes a main control board 710 and an interface board 730.

The main control board 710 is also referred to as a main processing unit (main processing unit, MPU) or a route processor card (route processor card). The main control board 710 controls and manages components in the network device 700, including functions of routing calculation, device management, device maintenance, and protocol processing. The main control board 710 includes a central processing unit 711 and a memory 712.

The interface board 730 is also referred to as a line interface processing unit (line interface processing unit, LPU), a line card (line card), or a service board. The interface board 730 is configured to provide various service interfaces and implement data packet forwarding. The service interfaces include but are not limited to Ethernet interfaces, POS (packet over SONET/SDH) interfaces, and the like. The Ethernet interfaces are, for example, flexible Ethernet clients (flexible Ethernet clients, FlexE Clients). The interface board 730 includes a central processing unit 731, a network processor 732, a forwarding entry memory 734, and a physical interface card (physical interface card, PIC) 733.

The central processing unit 731 on the interface board 730 is configured to control and manage the interface board 730 and communicate with the central processing unit 711 on the main control board 710.

The network processor 732 is configured to implement packet forwarding processing. A form of the network processor 732 may be a forwarding chip. Specifically, processing an uplink packet includes processing an inbound interface of the packet and searching for a forwarding table. Processing a downlink packet includes searching for a forwarding table, and the like.

The physical interface card 733 is configured to implement a physical layer interconnection function. Original traffic enters the interface board 730 from the physical interface card 733, and a processed packet is sent out from the physical interface card 733. The physical interface card 733 includes at least one physical interface, and the physical interface is also referred to as a physical interface. The physical interface card 733 is also referred to as a subcard, may be installed on the interface board 730, and is responsible for converting an optical/electrical signal into a packet, performing validity check on the packet, and forwarding the packet to the network processor 732 for processing. In some embodiments, the central processing unit 731 of the interface board 703 may also execute functions of the network processor 732, for example, implement software forwarding based on a general-purpose CPU, so that the physical interface card 733 does not need the network processor 732.

Optionally, the network device 700 includes a plurality of interface boards. For example, the network device 700 further includes an interface board 740. The interface board 740 includes a central processing unit 741, a network processor 742, a forwarding entry memory 744, and a physical interface card 743.

Optionally, the network device 700 further includes a switching board 720. The switching board 720 may also be referred to as a switch fabric unit (switch fabric unit, SFU). When the network device has a plurality of interface boards 730, the switching board 720 is configured to complete data exchange between the interface boards. For example, the interface board 730 may communicate with the interface board 740 through the switching board 720.

The main control board 710 is coupled to the interface board 730. For example, the main control board 710, the interface board 730, the interface board 740, and the switching board 720 are connected to a system backplane via a system bus to implement interworking. In a possible implementation, an inter-process communication (inter-process communication, IPC) channel is established between the main control board 710 and the interface board 730, and the main control board 710 communicates with the interface board 730 through the IPC channel.

Logically, the network device 700 includes a control plane and a forwarding plane. The control plane includes the main control board 710 and the central processing unit 731. The forwarding plane includes components used for forwarding, for example, the forwarding entry memory 734, the physical interface card 733, and the network processor 732. The control plane performs functions such as routing, generating a forwarding table, processing signaling and a protocol packet, and configuring and maintaining a device status. The control plane delivers the generated forwarding table to the forwarding plane. On the forwarding plane, the network processor 732 performs table lookup and forwarding on a packet received by the physical interface card 733 based on the forwarding table delivered by the control plane. The forwarding table delivered by the control plane may be stored in the forwarding entry memory 734. In some embodiments, the control plane and the forwarding plane may be completely separated, and are not on a same device.

It should be understood that an operation on the interface board 740 in this embodiment of this application is consistent with an operation on the interface board 730. For brevity, details are not described. It should be understood that the network device 700 in this embodiment may correspond to the first network device in the foregoing method embodiments. The main control board 710, the interface board 730, and/or the interface board 740 in the network device 700 may implement various steps in the foregoing method embodiments. For brevity, details are not described herein.

It may be understood that, there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a service data processing function for the entire system. In a distributed forwarding architecture, a network device may have at least one switching board, and implements data exchange between a plurality of interface boards through the switching board, to provide a large-capacity data exchange and processing capability. Therefore, a data access and processing capability of the network device in the distributed architecture is stronger than that of the device in the centralized architecture. Optionally, the network device may alternatively be in a form in which there is only one board card. To be specific, there is no switching board, and functions of the interface board and the main control board are integrated on the board card. In this case, a central processing unit on the interface board and a central processing unit on the main control board may be combined to form one central processing unit on the board card, to perform functions obtained after the two central processing units are combined. This form of device (for example, a network device like a low-end switch or a router) has a weak data exchange and processing capability. A specific architecture to be used depends on a specific networking deployment scenario.

In some possible embodiments, the network device may be implemented as a virtualized device. For example, the virtualized device may be a virtual machine (virtual machine, VM) that runs a program used to send a packet, and the virtual machine is deployed on a hardware device (for example, a physical server). The virtual machine is a complete software-simulated computer system that has complete hardware system functions and that runs in an entirely isolated environment. The virtual machine may be configured as the network device. For example, the network device may be implemented based on a general-purpose physical server in combination with a network functions virtualization (network functions virtualization, NFV) technology. The network device is a virtual host, a virtual router, or a virtual switch. After reading this application, a person skilled in the art may obtain, on the general-purpose physical server through virtualization with reference to the NFV technology, the network device having the foregoing functions. Details are not described herein.

It should be understood that the network devices in the foregoing product forms have any function of the first network device or the second network device in the foregoing method embodiments. Details are not described herein.

An embodiment of this application further provides a chip, including a processor and an interface circuit. The interface circuit is configured to receive instructions, and transmit the instructions to the processor. The processor may be, for example, a specific implementation form of the device 500 shown in FIG. 5, and may be configured to perform the foregoing method. The processor is coupled to a memory. The memory is configured to store a program or instructions. When the program or the instructions is/are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in a memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field-programmable gate array (field-programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip.

An embodiment of this application further provides a clock synchronization network system, where the system includes a boundary clock device and a master clock device, and both the boundary clock device and the master clock device perform the clock class setting method provided in the foregoing embodiments.

An embodiment of this application further provides a computer-readable storage medium including instructions and a computer program. When the computer-readable storage medium is run on a computer, the computer is enabled to perform the clock class setting method provided in the foregoing embodiments.

An embodiment of this application further provides a computer program product including instructions and a computer program. When the computer program product runs on a computer, the computer is enabled to perform the clock class setting method provided in the foregoing embodiments.

In the specification, claims, and accompanying drawings of this application, terms "first", "second", "third", "fourth", and so on (if any) are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, the terms "include" and "have" and any variants thereof are intended to cover a non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, for example, a USB flash drive, a removable hard disk, a read-only memory (ROM, read-only memory), a random access memory (RAM, random access memory), a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium. The communication medium includes any medium that facilitates transmission of a computer program from one place to another. The storage medium may be any available medium accessible to a general-purpose or a dedicated computer.

In the foregoing specific implementations, the objectives, technical solutions, and the benefits of this application are further described in detail. It should be understood that the foregoing descriptions are merely specific implementations of this application.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A clock class setting method, applied to a clock device, comprising:
determining, by the clock device, a clock class in a locked mode as a first value, and determining, by the clock device, a clock class in an out-of-holdover mode as a second value, wherein the first value is greater than the second value; and
if the clock device enters the out-of-holdover mode from the locked mode, changing, by the clock device, the clock class from the first value to the second value.

2. The method according to claim 1, wherein the clock device is a 1588 clock device, or the clock device is a 1588 boundary clock device.

3. The method according to claim 1 or 2, wherein the method further comprises:
if the clock device does not lose a clock source, maintaining, by the clock device, the clock class as the first value.

4. The method according to claim 1 or 2, wherein if the clock device enters the out-of-holdover mode from the locked mode, the changing, by the clock device, the clock class from the first value to the second value comprises:
the clock device enters a within-holdover mode from the locked mode, changing, by the clock device, the clock class from the first value to a third value, wherein the third value indicates a clock class of the clock device in the within-holdover mode, and the first value is greater than the third value; and
entering, by the clock device, the out-of-holdover mode from the within-holdover mode, and changing, by the clock device, the clock class from the third value to the second value, wherein the second value is greater than the third value.

5. The method according to claim 1 or 2, wherein the method further comprises:
if the clock device enters the locked mode from a free-run mode, changing, by the clock device, the clock class from a fourth value to the first value, wherein the fourth value is greater than or equal to the first value, and the fourth value indicates a clock class of the clock device in the free-run mode.

6. The method according to any one of claims 1 to 5, wherein the clock class is a clock class in a default dataset of a boundary clock device.

7. The method according to any one of claims 1 to 6, wherein the method further comprises:
if the clock device is in the locked mode, sending, by the clock device, a first announce packet, wherein a clock class comprised in the first announce packet is a clock class of a clock source received by the clock device; and
if the clock device is not in the locked mode, sending, by the clock device, a second announce packet, wherein a clock class comprised in the second announce packet is a sender clock class defined in the clock device.

8. The method according to claim 7, wherein
if the clock device is in the out-of-holdover mode, the sender clock class is the second value;
if the clock device is in the within-holdover mode, the sender clock class is the third value, wherein the third value indicates the clock class in the within-holdover mode; and
if the clock device is in the free-run mode, the sender clock class is the fourth value, wherein the fourth value indicates the clock class in the free-run mode.

9. The method according to any one of claims 1 to 8, wherein if the clock device is a boundary clock device, a clock synchronization network in which the boundary clock device is located comprises a first boundary clock device, a second boundary clock device, and a first master clock device, the first boundary clock device is connected to the first master clock device, the first master clock is a clock source of the first boundary clock device, the second boundary clock device is connected to the first boundary clock device, and the method further comprises:
if the first boundary clock device loses the clock source, changing a clock class of the first boundary clock device from the first value to the second value in the out-of-holdover mode or the third value in the within-holdover mode;
maintaining, by the second boundary clock device, a clock class as the first value; and
determining the first boundary clock device as a new clock source.

10. The method according to claim 9, wherein the clock synchronization network further comprises a second master clock device, the second boundary clock device is connected to the second master clock device, a value of a clock class corresponding to the second master clock device is less than the first value, and the second master clock device serves as a new clock source.

11. A network device, wherein the network device is a clock device and comprises:
a determining unit, configured to: determine a clock class of the clock device in a locked mode as a first value, and determine a clock class of the clock device in an out-of-holdover mode as a second value, wherein the first value is greater than the second value; and
a processing unit, configured to: if the clock device enters the out-of-holdover mode from the locked mode, change the clock class from the first value to the second value.

12. The network device according to claim 11, wherein the clock device is a 1588 clock device, or the clock device is a 1588 boundary clock device.

13. The network device according to claim 11 or 12, wherein the processing unit is further configured to: if the clock device does not lose a clock source, maintain the clock class as the first value.

14. The network device according to claim 11 or 12, wherein the processing unit is specifically configured to: the clock device enters a within-holdover mode from the locked mode, change the clock class from the first value to a third value, wherein the third value indicates a clock class of the clock device in the within-holdover mode, and the first value is greater than the third value; and the clock device enters the out-of-holdover mode from the within-holdover mode, change the clock class from the third value to the second value, wherein the second value is greater than the third value.

15. The network device according to claim 11 or 12, wherein the processing unit is further configured to: if the clock device enters the locked mode from a free-run mode, change the clock class from a fourth value to the first value, wherein the fourth value is greater than or equal to the first value, and the fourth value indicates a clock class of the clock device in the free-run mode.

16. The network device according to any one of claims 11 to 15, wherein the clock class is a clock class in a default dataset of the clock device.

17. The network device according to any one of claims 11 to 16, wherein the network device further comprises a sending unit;
the sending unit is configured to: if the clock device is in the locked mode, send a first announce packet, wherein a clock class comprised in the first announce packet is a clock class of a clock source received by the clock device; and
the sending unit is configured to: if the clock device is not in the locked mode, send a second announce packet, wherein a clock class comprised in the second announce packet is a sender clock class defined in the clock device.

18. The network device according to claim 17, wherein
if the clock device is in the out-of-holdover mode, the sender clock class is the second value;
if the clock device is in the within-holdover mode, the sender clock class is the third value, wherein the third value indicates the clock class in the within-holdover mode; and
if the clock device is in the free-run mode, the sender clock class is the fourth value, wherein the fourth value indicates the clock class in the free-run mode.

19. The network device according to any one of claims 11 to 18, wherein if the clock device is a boundary clock device, a clock synchronization network in which the boundary clock device is located comprises a first boundary clock device, a second boundary clock device, and a first master clock device; the first boundary clock device is connected to the first master clock device, the first master clock is a clock source of the first boundary clock device, and the second boundary clock device is connected to the first boundary clock device; and if the first boundary clock device loses the clock source, a clock class of the first boundary clock device changes from the first value to the second value in the out-of-holdover mode or the third value in the within-holdover mode, the second boundary clock device maintains a clock class as the first value, and the first boundary clock device is a new clock source.

20. The network device according to claim 19, wherein the clock synchronization network further comprises a second master clock device, the second boundary clock device is connected to the second master clock device, a value of a clock class corresponding to the second master clock device is less than the first value, and the second master clock device serves as a new clock source.

21. A clock synchronization network system, comprising a boundary clock device and a master clock device, wherein
both the boundary clock device and the master clock device perform the method according to any one of claims 1 to 10.

22. A computer-readable storage medium, comprising instructions, wherein when the instructions are run on a computer, the computer is enabled to perform the method according to any one of claims 1 to 10.

23. A computer program product, wherein the computer program product comprises a program, and when the program is run on a processor, a computer or a network device is enabled to perform the method according to any one of claims 1 to 10.
